# EUROPÄISCHE PATENTSCHRIFT

(11) **EP 4 017 750 B1**
(45) Veröffentlichungstag und Bekanntmachung des Hinweises auf die Patenterteilung: **15.03.2023**
(21) Anmeldenummer: 21742746.7
(22) Anmeldetag: 30.06.2021
(51) Int. Cl.: B60K 35/00, B60K 37/04, B60Q 3/12, B60Q 3/72, B60Q 3/76

(54) **ABSCHATTUNGSVORRICHTUNG IN EINEM KRAFTFAHRZEUG**
SHADING APPARATUS IN A MOTOR VEHICLE
APPAREIL D'OMBRAGE DANS UN VÉHICULE À MOTEUR

(30) Priorität: 20.07.2020 DE 102020004326
(43) Veröffentlichungstag der Anmeldung: 29.06.2022
(73) Patentinhaber: Mercedes-Benz Group AG, 70372 Stuttgart (DE)
(72) Erfinder: BURGER, Benjamin, 71093 Weil im Schönbuch (DE); KLAPPER, Steffen, 75417 Mühlacker (DE)
(74) Vertreter: JENSEN & SON
(86) Internationale Anmeldenummer: PCT/EP2021/068030
(87) Internationale Veröffentlichungsnummer: WO 2022/017748

(56) Entgegenhaltungen:
- EP-A1- 1 262 741
- EP-A2- 1 352 784
- DE-C2- 4 107 021
- FR-A3- 3 016 722
- GB-A- 2 571 266
- JP-A- 2015 017 895

## Beschreibung

Die Erfindung betrifft eine Abschattungsvorrichtung für ein Beifahrerdisplay in einem Kraftfahrzeug, welche zur Verhinderung eines seitlichen Blickes auf das Beifahrerdisplay schaltbar ausgebildet ist.

Die DE 101 26 186 A1 Die D1 offenbart eine in einem Fahrzeugdach angeordnete Beleuchtungsvorrichtung, die auf eine reflexive Anzeige gerichtet ist. Als Ersatz für eine Hintergrundbeleuchtung wird eine Flüssigkristallanzeige mit durch einen Spiegel reflektiertem Tageslicht oder Licht einer Beleuchtungsvorrichtung beleuchtet.

Aus der DE 10 2019 113 024 A1 ist eine Projektionseinrichtung für einen Innenraum eines Kraftfahrzeugs bekannt, die eine Lichtquelle zum Erzeugen von Lichtstrahlen und eine Ablenkeinrichtung zum Lenken der Lichtstrahlen auf eine Oberfläche eines Bauelements im Innenraum des Kraftfahrzeugs umfasst.

Die JP 2015 017895 A offenbart eine Displayvorrichtung mit flächigen, senkrecht zueinander aufweisen Prismenstrukturen aufweisenden Elementen, so dass von einer Zerstreuungsplatte abgestrahltes Licht auf einen Nutzer gebündelt und die Leuchtdichte verbessert wird.

Aus der GB 2571266 A ist eine Steuerung und ein Verfahren zum Steuern der Helligkeit eines beleuchteten Bereichs in einem Fahrzeug bekannt. Die Steuerung ist konfiguriert zum Empfangen eines Eingangssignals, das eine erfasste Blickrichtung der Augen eines Fahrers des Fahrzeugs angibt, sowie zur Bestimmung einer Beziehung zwischen der erfassten Blickrichtung und einem vorbestimmten Bereich im Fahrzeug. Des Weiteren stellt die Steuerung ein Helligkeitssteuersignal bereit, um die Helligkeit einer Lichtquelle in Abhängigkeit von der ermittelten Beziehung einzustellen.

Aus der EP 1 262 741 A1 ist eine Anzeigevorrichtung bekannt, bei dem eine reflexive Anzeige durch eine an einem Fahrzeugdach oder in einem an das Fahrzeugdach angrenzenden Bereich angeordnete Lichtquelle beleuchtet wird, so dass auf eine direkt an der Anzeige angeordnete Frontbeleuchtung der reflexiven Anzeige verzichtet werden kann.

Die DE 41 07 021 C2 offenbart eine Anzeigevorrichtung zur Darstellung von Fernsehbildern mit einem Flüssigkristallfilter, wobei durch am Rand der Anzeigevorrichtung angeordnete Lampen die Anzeigevorrichtung mit etwa 10 Ix beleuchten, wodurch eine Totzone für die Position des Fahrersitzes wesentlich verbreitert wird. Wahlweise können die Lampen während der Nacht mit einem nicht gezeigten Schalter für die Scheinwerfer des Fahrzeugs gekoppelt sein, um die Lampen ein- und auszuschalten, oder um die Heiligkeit der Lampen so anzupassen, dass Unterschiede in den Umgebungslichtbedingungen ausgeglichen werden.

Während der Fahrt eines Fahrzeuges dürfen dem Fahrer des Fahrzeuges keine Animationen bzw. bewegte Bilder, wie z.B. Filme, angezeigt werden. Dies führt dazu, dass für den Fahrer eine Abschattung der Inhalte notwendig ist, wenn z.B. auf der Beifahrerseite ein Passagier einen Film ansieht. Aus der US 2013/0162924 A1 ist ein schaltbares privates Filter bekannt, mittels welchem Informationen in mindestens zwei Modi angezeigt werden. In dem ersten Modus wird ein Blickwinkel limitiert, so dass nur ein Blick von einer normalen nahen Orientierung aus auf das Filter möglich ist. In dem zweiten Modus wächst der Blickwinkel an, so dass die Information auch aus einem größeren schrägen Winkel gesehen werden kann.

Nachteil der vorstehenden Abschattungsvorrichtung ist, dass bei einem Blick des Fahrers auf einen Bildschirm, trotz aktiver Abschattung je nach Blickwinkel bewegte Restfragmente sichtbar sind.

Aufgabe der Erfindung ist demgegenüber eine Vorrichtung und ein Verfahren bereitzustellen, mittels welchen die Ablenkung des Fahrers weiter minimiert werden kann.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft eine Abschattungsvorrichtung, die ein auf das Beifahrerdisplay ausgerichtetes, von einer Steuereinheit angesteuertes Leuchtmittel umfasst, das zur Verhinderung von vom Sitzplatz des Fahrers trotz einer auf Abschattung geschalteten Blickschutzeinrichtung weiterhin erkennbaren bewegte Restfragmenten das Beifahrerdisplay von extern des Displays beleuchtet. Das Beifahrerdisplay kann gezielt mit dem Fremdlicht beleuchtet werden, die Kontrastverhältnisse zwischen Bildschirm- und Umgebungshelligkeit sind dadurch beeinflussbar. Mit anderen Worten sinkt durch das fremde Licht, insbesondere bei Dunkelheit der Kontrast des erhellten Beifahrerdisplays zur Umgebung ab, das Bild auf dem Bildschirm wird weniger hell wahrgenommen, wodurch die sogenannten Restfragmente vom Fahrer nicht mehr erkennbar sind. Die Blickschutzeinrichtung ist beispielsweise als schaltbare, unterhalb des Deckglases des Beifahrerdisplays angeordnete Blickschutzfolie ausgeführt. Das Beifahrerdisplay ist beispielsweise als LCD-Display mit einem Backlight angeordnet. In einer speziellen Ausführung kommt zum Ausgleich von Helligkeitsschwankungen ein Dual-Backlight zum Einsatz ein Backlight leuchtet im Normalbetrieb, d.h. im public mode das andere Backlight im Abschattungsbetrieb, d.h. im private mode. Erfindungsgemäß steuert die Steuereinheit die Helligkeit des Leuchtmittels in Abhängigkeit der Helligkeit des Beifahrerdisplays an. Die Steuereinheit empfängt ein Helligkeitssignal von dem Beifahrerdisplay. Anhand einer oder mehreren hinterlegten Kennlinie, die eine Zuordnung der Displayhelligkeit zu einer Helligkeit des Leuchtmittels wiedergeben, steuert die Steuereinheit das Leuchtmittel an. In Verbindung mit der Umgebungshelligkeit kann dementsprechend auch ein Kennfeld hinterlegt sein, das eine Helligkeit des Leuchtmittels in Abhängigkeit der Umgebungshelligkeit und der Displayhelligkeit wiedergibt. In vorteilhafter Weise kann damit in Abhängigkeit einer systemseitig oder vom Nutzer eingestellten Bildschirmhelligkeit eine optimierte Blickabschattung des Fahrers erzielt werden.

In einer weiteren bevorzugten Ausführungsform umfasst die Vorrichtung einen Umgebungslichtsensor, wobei die Steuereinheit die Helligkeit des Leuchtmittels in Abhängigkeit der Umgebungshelligkeit steuert. Anhand von einer oder mehreren Kennlinien, die eine Zuordnung der Umgebungshelligkeit zu einer Helligkeit des Leuchtmittels wiedergeben, steuert die Steuereinheit das Leuchtmittel an. Die Kennlinien sind empirische ermittelt, indem bei verschiedenen Umgebungshelligkeiten die Helligkeit des Leuchtmittels so eingestellt wird, dass vom Platz des Fahrers bei einer auf Abschattung geschalteten Blickschutzeinrichtung keine Restfragmente, d.h. Schatten auf dem Beifahrerdisplay sichtbar sind. In bevorzugter Ausführungsform ist der Umgebungslichtsensor vom Lichteinfall des Leuchtmittels und des Beifahrerdisplays abgeschirmt angeordnet, da ansonsten eine Veränderung der Lichtstärke des Leuchtmittels als Veränderung der Umgebungshelligkeit gewertet wird. Die Abschirmung erfolgt beispielsweise durch eine entfernte Anordnung vom Beifahrerdisplay und/oder ein Abschirmgehäuse.

In einer Weiterbildung wird das Leuchtmittel erst oberhalb einer vorgegebenen Grenzgeschwindigkeit aktiviert. Im niedrigen Geschwindigkeitsbereich ist die Gefahr einer Ablenkung des Fahrers durch Restfragmente gering, insofern kann auf die Aktivierung des Leuchtmittels verzichtet werden.

In einer modifizierten Ausführungsform umfasst das Leuchtmittel eine Blende, die aus dem Leuchtmittel austretendes Licht auf das Beifahrerdisplay fokussiert. Durch die Bündelung des von dem Leuchtmittel austretenden Lichtes wird der Fahrzeuginnenraum nicht mehr als nötig erhellt, wodurch eine Ablenkung des Fahrers reduzierbar ist.

In einer weiteren bevorzugten Ausführungsform ist das Leuchtmittel in einem vorzugsweise im Fahrzeughimmel angeordneten Bedienmodul angeordnet. Ein derartiges Bedienmodul ist üblicherweise im Dachbereich zwischen Fahrer und Beifahrer angeordnet und umfasst beispielsweise Bedienelemente für Schiebedach, Innenraumbeleuchtung und Leselicht. Eine Integration des Leuchtmittels in dem Bedienmodul bietet neben einer günstigen Position bereits entsprechende Anschlussmöglichkeiten von Strom und Datenleitung, womit die erfindungsgemäße Abschattungseinrichtung kostengünstig umsetzbar ist.

In einem weiteren Ausführungsbeispiel passt das Beifahrerdisplay die Bildschirmhelligkeit in Abhängigkeit des Umgebungslichtes an. Um eine möglichst gute Erkennbarkeit von Inhalten und gleichzeitig eine möglichst geringe Blendung des Betrachters zur gewährleisten, wird die Bildschirmhelligkeit bei Dunkelheit abgesenkt und bei einer hohen Umgebungshelligkeit angehoben. In Verbindung mit dem Leuchtmittel kann in allen Betriebszuständen des Beifahrerdisplays eine wirksame Blickabschattung des Fahrers und eine für entspanntes Betrachten erforderliche hohe Bildqualität durch den Beifahrer realisiert werden.

In einer weiteren oder alternativen Ausbildungsform umfasst das Beifahrerdisplay eine Prismenfolie, die zur Vermeidung von für den Fahrer irritierende Spiegelung in einer Windschutzscheibe des Kraftfahrzeugs eine Abschwächung der Bildschirmhelligkeit ab einem vorgegeben Grenzwinkel bewirkt. Insbesondere durch an dem Beifahrerdisplay hervorgerufene Reflektionen der Lichtstrahlen des Leuchtmittels, die sich an der Windschutzscheibe wiederspiegeln und zur Sichtbehinderung und Ablenkung des Fahrers führen, werden durch die Prismenfolie unterbunden. Die Prismenfolie ist dabei derart ausgelegt, dass eine definierte Abschwächung des Lichtaustritts an der Displayoberfläche ab einem vorgegebenen vertikalen Grenzwinkel erfolgt.

Ein zweiter Aspekt der Erfindung betrifft ein Kraftfahrzeug mit einer Abschattungseinrichtung umfassend vorab genannte Merkmale.

Ein dritter Aspekt der Erfindung betrifft ein Verfahren zur Steuerung einer Abschattungsvorrichtung, wobei das Beifahrerdisplay zur Verhinderung von vom Sitzplatz des Fahrers trotz einer auf Abschattung geschalteten Blickschutzeinrichtung weiterhin erkennbaren bewegten Restfragmente beleuchtet wird, wobei die Helligkeit des Leuchtmittels dabei in Abhängigkeit der Helligkeit des Beifahrerdisplays angesteuert wird. Mittels der erfindungsmäßen Steuerung der Abschattungsvorrichtung wird bei allen Umgebungsbedingungen und Displayhelligkeiten eine wirksame Abschattung der Displayinhalte für einen auf dem Fahrersitzplatz sitzenden Betrachter erzielt. Die Intensität des Leuchtmittels wird dabei derart gesteuert, dass Restfragmente in Form von bewegten Schatten auf dem Beifahrerdisplay nicht mehr wahrgenommen werden können.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist.

Dabei zeigen:
- Fig. 1: Innenraum eines Kraftfahrzeugs mit einer erfindungsgemäßen Abschattungsvorrichtung und
- Fig. 2: Kennfeld zur Steuerung des Leuchtmittels der Abschattungsvorrichtung in Abhängigkeit der Umgebungshelligkeit und Helligkeit des Beifahrerdisplays.

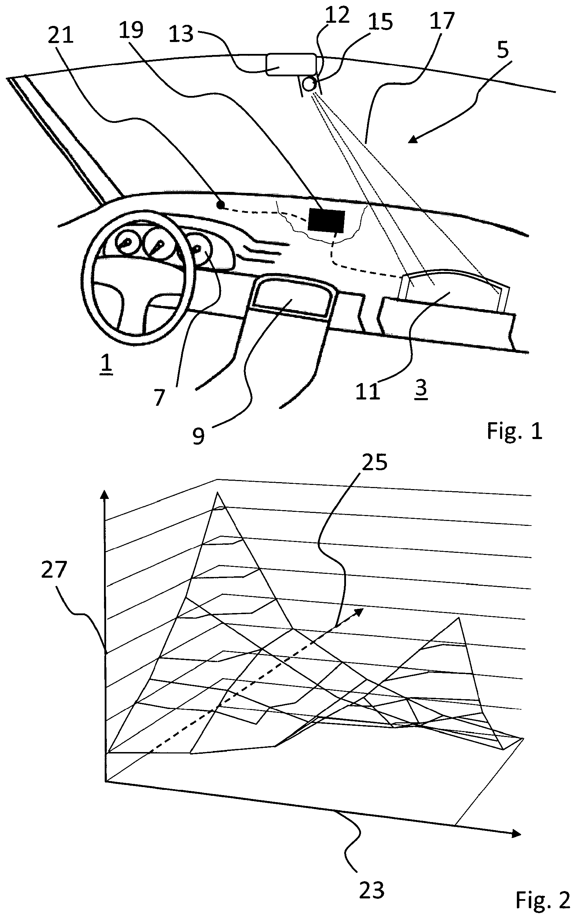

Gemäß Fig.1 ist ein Aufenthalts- bzw. Sitzbereich eines Fahrers 1 und eines Beifahrers 3 eines schematisch dargestellten Fahrzeuginnenraums 5 gezeigt. Das Fahrzeug weist ein dem Aufenthaltsbereich des Fahrers 1 zugeordnetes Instrumentcluster 7, ein mittig angeordnetes Display 9 und ein Beifahrerdisplay 11 auf. Das Instrumentcluster 7 zeigt dem Fahrer fahrtrelevante Daten an, das mittig angeordnete Display 9 ist für Fahrer und Beifahrer vorgesehen, beispielsweise zur Einstellung von Radiosendern oder eine Innenraumtemperatur, und das Beifahrerdisplay 11 ist zur Unterhaltung des Beifahrers mit bewegten Bildern wie Filmen, Fernsehsendungen etc. vorgesehen. Das Beifahrerdisplay umfasst eine schaltbare Blickschutzeirichtung. Die aus dem Stand der Technik bekannte beispielsweise als Blickschutzfolie ausgeführte Blickschutzeinrichtung wird auf aktiv geschaltet, sobald animierte oder bewegte Bilder gezeigt werden, so dass diese von einer Person auf dem Fahrersitz, d.h. im Aufenthaltsbereich des Fahrers 1 nicht erkannt werden können. Allerdings gelingt die Abschattung des Fahrerblicks auf das Display durch Aktivierung der Blickschutz bei entsprechende Display- und Umgebungshelligkeit nur ungenügend, da aufgrund eines hohen Kontrastverhältnisses zwischen Umgebungshelligkeit und der der Helligkeit des Beifahrerdisplays 11 der Fahrer 1 von seinem Aufenthalts- bzw. Sitzbereich weiterhin bewegte Schatten erkennen kann.

In dem Fahrzeuginnenraum 5 ist weiter eine Dachbedieneinheit 13 angeordnet. Neben verschiedenen nicht gezeigten Bedienelementen für Schiebedach, Leseleuchte etc. ist in der Dachbedieneinheit 13 ein Leuchtmittel 15 angeordnet. Das von dem Leuchtmittel 15 abgestrahlte Lichtstrahlbündel 17 ist auf das Beifahrerdisplay 11 mittels einer Blende 12 fokussiert.

Über eine nicht gezeigte Datenleitung ist das Leuchtmittel 15 mit einer Steuereinheit 19 verbunden. Die Steuereinheit 19 ist wiederum über eine Datenleitung mit dem Beifahrerdisplay 11 und einem Umgebungslichtsensor 19 verbunden.

In der Steuereinheit 19 sind Kennlinien hinterlegt, die jedem Helligkeitswert im Fahrzeuginnenraum 5 und jedem Helligkeitswert des Beifahrerdisplays 11 einen Helligkeitswert des Leuchtmittels 15 zuordnen.

Das Leuchtmittels 15 wird von der Steuereinheit 19 derart angesteuert, dass diese den aus Kennlinien oder dem Kennfeld in Abhängigkeit der Umgebungshelligkeit und der Helligkeit des Beifahrerdisplays ermittelten Helligkeitswert annimmt.

Die von dem Leuchtmittel 15 ausgestrahlten Lichtstrahlen sind auf das Beifahrerdisplay 11 fokussiert, womit sich der Kontrastunterschied zur Umgebung reduzieren lässt. Durch die Reduzierung der Kontrastunterschiede sind vom Aufenthaltsbereich des Fahrers 1 auf dem Beifahrerdisplay 11 keine Restfragmente mehr erkennbar.

Die Fig. 2 zeigt exemplarisch ein in der Steuereinheit 19 hinterlegtes Kennfeld zur Ansteuerung des Leuchtmittels 15. Auf der Achse 23 ist die Umgebungshelligkeit, auf der Achse 25 die Helligkeit des Beifahrerdisplays abgetragen. Jedem Wertepaar von Umgebungshelligkeit und Displayhelligkeit ist eine auf der Achse 27 abgetragene Helligkeit des Leuchtmittels 15 zugeordnet. Für zwischen den Wertepaaren liegenden Werten wird der Helligkeitswert des Leuchtmittels 15 interpoliert. Das Kennfeld kann in Abhängigkeit der Bauart von Blickschutzeirichtung und Beifahrerdisplay erheblich von dem dargestellten abweichen. Das gezeigte Kennfeld dient lediglich zur Verdeutlichung der grundlegenden Zusammenhänge.

Beispielsweise bei sehr niedriger Displayhelligkeit und gleichzeitig bei niedriger Umgebungshelligkeit aufgrund des geringen Kontrastunterschiedes eine geringe Helligkeit des Leuchtmittels 15 einzustellen. Mit steigender Umgebungshelligkeit bei gleichbleibender niedriger Displayhelligkeit wäre die Helligkeit des Leuchtmittels aufgrund des zunehmenden Kontrastes zu erhöhen.

Bei einer hohen Umgebungshelligkeit und einer geringen Displayhelligkeit ist die Helligkeit des Leuchtmittels 15 zu erhöhen. Mit steigender Displayhelligkeit bei gleichbleibend hoher Umgebungshelligkeit kann die Helligkeit des Leuchtmittels 15 aufgrund des abnehmenden Kontrastes reduziert werden.

Um alle bauartbedingen Einflüsse berücksichtigen zu können, werden die Werte des Kennfelds empirisch ermittelt. Hierzu wird für entsprechende Wertepaare von Umgebungshelligkeit und Displayhelligkeit ein optimaler Wert für die Helligkeit des Leuchtmittels bestimmt, d.h. derjenige Helligkeitswert der eine bestmögliche Ausblendung der Inhalte des Beifahrerdisplays für einen sich im Aufenthaltsbereich eines Fahrers 1 befindlichen Betrachters ermöglicht.

## Patentansprüche

1. Abschattungsvorrichtung für ein Kraftfahrzeug, wobei die Abschattungsvorrichtung ein Beifahrerdisplay (11) mit einer schaltbaren Blickschutzeinrichtung umfasst, die in vorgegebenen Betriebszuständen aktiv geschaltet ist, so dass auf dem Beifahrerdisplay (11) gezeigte Anzeigeinhalte vom Sitzbereich des Fahrers (1) aus unkenntlich sind, wobei die Abschattungsvorrichtung ein auf das Beifahrerdisplay (11) ausrichtbares von einer Steuereinheit (19) angesteuertes Leuchtmittel (15) umfasst, das zur Verhinderung von vom Sitzbereich des Fahrers (1) trotz einer aktiv geschalteten Blickschutzeinrichtung weiterhin erkennbaren, Restfragmente umfassende Anzeigeinhalten das Beifahrerdisplay (11) beleuchtet, **dadurch gekennzeichnet, dass** die Steuereinheit (19) die Helligkeit des Leuchtmittels in Abhängigkeit der Helligkeit des Beifahrerdisplays (11) anhand einem von dem Beifahrerdisplay (11) empfangenen Helligkeitssignal ansteuert.

2. Abschattungsvorrichtung nach Anspruch 1,
**dadurch gekennzeichnet, dass**
die Vorrichtung einen Umgebungslichtsensor (21) umfasst, wobei die Steuereinheit (19) die Helligkeit des Leuchtmittels (11) in Abhängigkeit der Umgebungshelligkeit steuert.

3. Abschattungsvorrichtung nach einem der vorhergehenden Ansprüche,
**dadurch gekennzeichnet, dass**
das Leuchtmittel (11) eine Blende (12) umfasst, die aus dem Leuchtmittel (11) austretendes Licht auf das Beifahrerdisplay (11) fokussiert.

4. Abschattungsvorrichtung nach einem der vorhergehenden Ansprüche,
**dadurch gekennzeichnet, dass**
das Leuchtmittel (11) in einem im Fahrzeughimmel angeordneten Bedienmodul (13) angeordnet ist.

5. Abschattungsvorrichtung nach einem der vorhergehenden Ansprüche,
**dadurch gekennzeichnet, dass**
das Beifahrerdisplay (11) die Bildschirmhelligkeit in Abhängigkeit des Umgebungslichtes anpasst.

6. Abschattungsvorrichtung nach einem der vorhergehenden Ansprüche,
**dadurch gekennzeichnet, dass**
das Beifahrerdisplay (11) eine Prismenfolie umfasst, die zur Vermeidung von für den Fahrer irritierende Spiegelung in einer Windschutzscheibe des Kraftfahrzeugs eine Abschwächung der Bildschirmhelligkeit ab einem vorgegeben Grenzwinkel bewirkt.

7. Kraftfahrzeug mit einer Abschattungsvorrichtung nach einem der Ansprüche 1 bis 6.

8. Verfahren zur Steuerung einer Abschattungsvorrichtung für ein Kraftfahrzeug, wobei die Abschattungsvorrichtung ein Beifahrerdisplay (11) mit einer schaltbaren Blickschutzeinrichtung umfasst, die in vorgegebenen Betriebszuständen aktiv geschaltet ist, so dass auf dem Beifahrerdisplay (11) gezeigte Anzeigeinhalte vom Sitzbereich des Fahrers aus nicht erkennbar sind, wobei das Beifahrerdisplay zur Verhinderung von vom Sitzplatz des Fahrers trotz einer auf Abschattung geschalteten Blickschutzeinrichtung weiterhin erkennbaren, Restfragmente umfassende Anzeigeinhalten das Beifahrerdisplay (11) beleuchtet wird, **dadurch gekennzeichnet, dass** die Helligkeit des Leuchtmittels in Abhängigkeit eines von dem Beifahrerdisplay (11) empfangenen Helligkeitssignal angesteuert wird.

## Claims

1. Shading apparatus for a motor vehicle, the shading apparatus comprising a passenger display (11) with a switchable privacy device which is switched active in predetermined operating states, so that display contents shown on the passenger display (11) are unrecognisable from the seat region of the driver (1), wherein the shading apparatus comprises an illumination means (15), which can be oriented towards the passenger display (11) and is activated by a control unit (19) and which illuminates the passenger display (11) to prevent display contents which are still recognisable from the seat region of the driver (1) despite an active-switched privacy device and contain residual fragments,
**characterised in that**
the control unit (19) controls the brightness of the illumination means as a function of the brightness of the passenger display (11) on the basis of a brightness signal received by the passenger display (11).

2. Shading apparatus according to claim 1,
**characterised in that**
the apparatus comprises an ambient light sensor (21), the control unit (19) controlling the brightness of the illumination means (11) as a function of the ambient brightness.

3. Shading apparatus according to any of the preceding claims,
**characterised in that**
the illumination means (11) comprises an aperture (12), which focuses light emitted from the illumination means (11) onto the passenger display (11).

4. Shading apparatus according to any of the preceding claims,
**characterised in that**
the illumination means (11) is located in a control module (13) located in the vehicle roof lining.

5. Shading apparatus according to any of the preceding claims,
**characterised in that**
the passenger display (11) adjusts the screen brightness as a function of the ambient light.

6. Shading apparatus according to any of the preceding claims,
**characterised in that**
the passenger display (11) comprises a prism film which induces a reduction of the screen brightness from a predetermined limit angle to avoid a reflection in a windscreen of the motor vehicle, which is irritating for the driver.

7. Motor vehicle with a shading apparatus according to any of claims 1 to 6.

8. Method for controlling a shading apparatus for a motor vehicle, the shading apparatus comprising a passenger display (11) with a switchable privacy device which is switched active in predetermined operating states, so that display contents shown on the passenger display (11) are unrecognisable from the seat region of the driver (1), wherein the passenger display (11) is illuminated to prevent display contents which are still recognisable from the seat of the driver despite an active-switched privacy device and contain residual fragments,
**characterised in that**
the brightness of the illumination means is controlled as a function of a brightness signal received by the passenger display (11).

## Revendications

1. Dispositif d'ombrage pour un véhicule à moteur, le dispositif d'ombrage comprenant un dispositif d'affichage de passager (11) doté d'un dispositif de protection contre les regards pouvant être connecté, qui est activé dans des conditions de fonctionnement prédéfinies, de sorte que les contenus d'affichage affichés sur le dispositif d'affichage de passager (11) ne soient pas perceptibles depuis la zone du siège du conducteur (1),
le dispositif d'ombrage comprenant un moyen d'éclairage (11) commandé par une unité de commande (19) qui peut être orienté sur le dispositif d'affichage de passager (11), ledit moyen d'éclairage éclaire le dispositif d'affichage de passager (11) pour empêcher que des contenus d'affichage comprenant des fragments résiduels ne soient par ailleurs perceptibles depuis la zone de siège du conducteur (1) bien qu'un dispositif de protection contre les regards soit activé,
**caractérisé en ce que** l'unité de commande (19) règle la luminosité du moyen d'éclairage en fonction de la luminosité du dispositif d'affichage de passager (11) à l'aide d'un signal de luminosité reçu par le dispositif d'affichage de passager (11).

2. Dispositif d'ombrage selon la revendication 1, **caractérisé en ce que** le dispositif comprend un capteur de lumière environnante (21), dans lequel l'unité de commande (19) commande la luminosité du moyen d'éclairage (11) en fonction de la luminosité environnante.

3. Dispositif d'ombrage selon l'une quelconque des revendications précédentes, **caractérisé en ce que** le moyen d'éclairage (11) comprend un panneau (12) qui permet de concentrer la lumière provenant du moyen d'éclairage (11) sur le dispositif d'affichage de passager (11).

4. Dispositif d'ombrage selon l'une quelconque des revendications précédentes, **caractérisé en ce que** le moyen d'éclairage (11) est disposé dans un module de commande (13) disposé dans le plafond de véhicule à moteur.

5. Dispositif d'ombrage selon l'une quelconque des revendications précédentes, **caractérisé en ce que** le dispositif d'affichage de passager (11) s'adapte à la luminosité de l'écran en fonction de la lumière environnante.

6. Dispositif d'ombrage selon l'une quelconque des revendications précédentes, **caractérisé en ce que** le dispositif d'affichage de passager (11) comprend une feuille prismatique qui, pour éviter un réfléchissement dans un pare-brise du véhicule à moteur pouvant gêner le conducteur, produit une diminution de la luminosité de l'écran à partir d'un angle limite prédéfini.

7. Véhicule à moteur comprenant un dispositif d'ombrage selon l'une quelconque des revendications 1 à 6.

8. Procédé de commande d'un dispositif d'ombrage pour un véhicule à moteur, dans lequel le dispositif d'ombrage comprend un afficheur de passager (11) doté d'un dispositif de protection contre les regards pouvant être connecté, qui est activé dans des conditions de fonctionnement prédéfinies, de sorte que les contenus d'affichage affichés sur le dispositif d'affichage du passager (11) ne soient pas perceptibles depuis la zone du siège du conducteur (1),
le dispositif d'affichage de passager étant éclairé pour empêcher que des contenus d'affichage comprenant des fragments résiduels puissent être en outre perceptibles depuis la zone de siège du conducteur (11) malgré un dispositif de protection contre les regards activé, **caractérisé en ce que** la luminosité du moyen d'éclairage est commandée en fonction d'un signal de luminosité reçu par le dispositif d'affichage de passager (11).
